# EUROPÄISCHE PATENTSCHRIFT

(11) **EP 0 997 333 B1**
(45) Veröffentlichungstag und Bekanntmachung des Hinweises auf die Patenterteilung: **14.09.2005**
(21) Anmeldenummer: 99121263.0
(22) Anmeldetag: 25.10.1999
(51) Int. Cl.: B60J 7/00

(54) **Transparentes Dachmodul für ein Fahrzeugdach**
Transparent roof module for vehicle roof
Module de toit transparent pour toit de véhicle

(30) Priorität: 29.10.1998 DE 19849838
(43) Veröffentlichungstag der Anmeldung: 03.05.2000
(73) Patentinhaber: Webasto Dachsysteme GmbH, 82131 Stockdorf (DE)
(72) Erfinder: Teschner, Helmut, 86923 Finning (DE); Pätz, Werner, 86928 Hofstetten (DE); Wecker, Reinhard, 82223 Eichenau (DE)
(74) Vertreter: Wiese, Gerhard

(56) Entgegenhaltungen:
- DE-A- 3 732 873
- NL-A- 9 102 116
- US-A- 4 634 231
- US-A- 5 324 568

## Beschreibung

Die Erfindung befaßt sich mit einem transparenten Dachmodul für ein Fahrzeugdach.

Aus der DE 37 25 053 A1 ist ein Kraftfahrzeug-Glasdach mit einer außenliegen ersten Glasscheibe, die aus Weißglas gefertigt sein kann, bekannt, welche in einem ersten Teilbereich, der über einer in der festen Dachhaut ausgebildeten Sichtöffnung liegt, an ihrer Unterseite in Verbundbauweise mit einer kleineren Glasscheibe versehen ist, die einen Teil der einfallenden Sonnenenergie absorbiert, und in einem zweiten Teilbereich, der über einem festen Dachteil liegt, an ihrer Unterseite mit Solarzellen versehen ist. Nachteilig dabei ist die aufwendige Fertigung und das erhöhte Gewicht.

Aus DE 196 30 813 A1 ist ein Scheibenaufbau bekannt, der z.B. für den Deckel eines Fahrzeug-Schiebedaches verwendbar ist und aus einem Verbund aus einer äußeren größeren Glasscheibe und einer darunterliegenden inneren kleineren Glasscheibe besteht, wobei in dem Überlappungsbereich der Scheiben zwischen diesen ein elektrochromer Schichtaufbau vorgesehen ist, um die Transmission des Verbunds zu steuern. Die äußere Glasscheibe wird vor dem Zusammenbau mit einem Teil des elektrochromen Schichtaufbaus beschichtet. Im Randbereich der äußeren Scheibe, in welchem die Scheiben nicht überlappen, ist die äußere Glasscheibe an ihrer Unterseite mit Solarzellen versehen. Nachteilig dabei ist die aufwendige Fertigung.

Aus NL 9102116 A ist eine Kombination aus einer elektrochromen Kristallbeschichtung und einer Teilbeschichtung mit Solarzellen an einem Deckel eines Fahrzeugdaches bekannt, wobei die durch die Solarzellen erzeugte Energie zur Veränderung der Lichtdurchlässigkeit der Kristalle verwendet wird.

Aus DE 37 13 854 A1 ist ein Fahrzeugdach mit einer von zwei Deckeln verschließbaren Dachöffnung in einer festen Dachhaut bekannt, wobei der vordere Deckel im wesentlichen aus einer Scheibe aus einem durchsichtigen Werkstoff besteht, die in ihrem Randbereich, der eine Durchsicht auf die Deckelmechanik verhindern soll, mit Solarzellen versehen ist. Ferner ist auch der eine Durchsicht gewährende zentrale Deckelteil mit gitterförmig angeordneten Solarzellen versehen, um die Sonneneinstrahlung in den Fahrzeuginnenraum zu vermindern. Auch hier ist die aufwendige Fertigung nachteilig.

Aus DE 41 05 389 C1 ist ein Solardeckel für Fahrzeugdächer bekannt, bei dem ein außen liegender Teilflächenbereich mit kristallinen Halbleiterwerkstoffen und ein zentraler Bereich mit amorphen Halbleiterwerkstoffen beschichtet ist. Der zentrale Bereich ist durch Ausbildung als Dünnschicht oder durch Einbringen feiner Löcher zumindest teiltransparent. Auch bei diesem Deckel ist der Herstellungs-Aufwand relativ groß, zumal wegen der unterschiedlichen erzeugten Spannungen der verwendeten Solarzellen-Typen dort noch spezielle elektronische Maßnahmen zur Nutzung des erzeugten Solarstroms notwendig sind. Der Deckel ist darüber hinaus relativ schwer.

Aus der US 5 324 568 A ist eine transmissionsreduzierende Bedruckung einer Dachscheibe bekannt, bei der durchsichtige und undurchsichtige Mikro-Flächenbereiche für eine begrenzte Lichtdurchlässigkeit sorgen. Eine Durchsicht ist dagegen durch eine derartige Scheibe nicht möglich. Gleiches gilt für eine partielle Emaille-Beschichtung einer getönten Scheibe, wie sie aus US 4 634 231 A bekannt ist.

Aus der DE 37 32 873 A1 ist eine Dachscheibe mit einer einen Teil der Fläche nahe einem hinteren Ausstellmechanismus einnehmenden Solarzellenanordnung bekannt. Die Befestigung der Mechanik ist dabei in optisch wenig ansprechender Weise sichtbar. Der übrige Bereich des Deckels ist transparent, wodurch eine starke Aufheizung des Fahrzeuginnenraums erfolgt, die durch die Lüftungsstellung des Deckels und den optional vorgesehenen Betrieb eines Gebläses nur teilweise kompensiert werden kann.

Aus der DE 40 20 972 A1 ist ein Verfahren zum randgenauen Aufdrucken eines Dekor-Rahmens auf eine Scheibe bekannt.

Aus der DE 197 16 389 C1 ist eine Solarzellenanordnung für ein Fahrzeugdach bekannt, bei der die Solarzellen auf einer wannenförmigen Kunststoffplatte angeordnet und von oben von einer Glasscheibe abgedeckt sind. Durch Verwendung der Kunststoffplatte als Träger wird zwar eine Gewichtsreduzierung erzielt. Es ist bei diesem Deckel jedoch keine Durchsicht möglich.

Es ist Aufgabe der vorliegenden Erfindung, ein durchsichtiges Dachmodul für ein Fahrzeugdach zu schaffen, welches eine möglichst effiziente Ausnutzung der Solarenergie bei hohem Komfort für die Fahrzeuginsassen erlaubt, leicht ist und dennoch einfach und kostengünstig zu fertigen ist.

Diese Aufgabe wird erfindungsgemäß durch ein Fahrzeugdach gemäß Anspruch 1 gelöst.

Bei dieser erfindungsgemäßen Lösung ist vorteilhaft, daß Solarzellen nur in nicht für die Durchsicht nutzbaren, d.h. nicht zum Komfort bezüglich des Lichteinfalls beitragenden Scheibenbereichen angeordnet sind, ein übermäßiger Lichteinfall und eine übermäßige Aufheizung des Fahrzeuginnenraums durch Infrarot-Strahlung vermieden wird und zugleich jedoch die Sonneneinstrahlung auf die Solarzellen nicht vermindert wird, wobei durch die Realisierung der Transmissionsverringerung in Durchsichtbereich mittels Aufbringen einer Folie und/oder Beschichtung auf die Scheibe das Dachmodul einfach und kostengünstig hergestellt werden kann, ohne daß sich das Gewicht des Dachmoduls wesentlich erhöht.

Gemäß der Erfindung ist vorgesehen, daß alle Flächenbereiche der Scheibe, die konstruktionsbedingt nicht zur Durchsicht vom Fahrzeuginneren nach außen nicht nutzbar ist, mit Solarzellen belegt sind und alle übrigen Flächenbereiche mit der transmissionsmindernden Beschichtung und/oder Folie versehen sind. Dies erlaubt eine sehr gute Ausnutzung der Solarenergie, insbesondere wenn die Scheibe aus Klarglas gefertigt ist, bei maximalem Komfort und einfacher Herstellung.

In bevorzugter Ausführung der Erfindung ist vorgesehen, daß die transmissionsmindernde Schicht als schwarze Keramikbedruckung mit Punkt- oder Lochfritten ausgebildet ist. Dies ist eine besonders einfache und kostengünstige Lösung.

Alternativ kann die transmissionsmindernde Schicht als eingefärbte Polycarbonat-Folie ausgebildet sein, die von unten mit Klebefolie auf die Scheibe laminiert ist. Diese Lösung zeichnet sich durch gute Verarbeitbarkeit und geringes Gewicht aus.

Die transmissionsmindernde Schicht kann auch als Metalloxidbeschichtung ausgebildet sein, die von unten auf die Scheibe aufgebracht ist. Diese Lösung zeichnet sich durch gute Verarbeitbarkeit und äußerst geringes Gewicht sowie dadurch aus, daß von außen keine Übergänge sichtbar sind.

Zusätzlich kann auf die Metalloxidbeschichtung eine eingefärbte transparente Polycarbonat-Folie mittels Klebefolie laminiert sein. Dadurch werden Transmissionseigenschaften ähnlich wie bei eingefärbten Gläsern erreicht und die Beschichtung wird vor Korrosion geschützt.

Ferner kann die transmissionsmindernde Schicht als kratzfest beschichtete Abdunklungsfolie ausgebildet sein, die mittels aufgebrachtem Acrylatkleber von unten auf die Glasscheibe aufgeklebt ist. Diese Lösung zeichnet sich durch Kratzfestigkeit aus.

Im folgenden ist eine Ausführungsform der Erfindung anhand der beiliegenden Zeichnungen näher erläutert. Es zeigen:
- Fig. 1: eine perspektivische Ansicht eines erfindungsgemäß ausgebildeten Dachdeckels,
- Fig. 2: einen Längsschnitt des Dachdeckels in Schließstellung, und
- Fig. 3: einen Teillängsschnitt durch den vorderen Bereich eines Dachdeckels mit einer Metalloxidbeschichtung.

In einer festen Dachhaut 10 eines Fahrzeugdaches ist eine Dachöffnung 12 ausgebildet, welche von einem Deckel 14 wahlweise verschlossen oder ganz oder zum Teil freigegeben werden kann, indem der Deckel 14 auf bekannte Weise verschoben und/oder ausgestellt wird. Der Deckel 14 umfaßt im wesentlichen eine transparente Scheibe 16 aus Klarglas, die in ihrem Randbereich mit einem Verstärkungselement 18 verklebt ist, welches mit der nicht dargestellten Dachmechanik in Verbindung steht. Zum Schutz der Klebeverbindung ist die Scheibe 16 im Bereich der Klebeverbindung mit einem Schutz 20 vor ultravioletter Strahlung, z.B. einer Glasfritte, versehen. In ihrem vorderen Bereich X ist die Scheibe 16 an ihrer Unterseite mit Solarzellen 22 laminiert, die mit einer undurchsichtigen Folie 24 hinterlegt sind. In Schließstellung des Deckels 14 liegen die Solarzellen 22 über einem dachfesten Bereich 26, welcher Befestigungs-, Antriebs- oder sonstige Elemente der Dachmechanik umfaßt und somit ohnehin konstruktionsbedingt, d.h. durch den konstruktiven Aufbau des Fahrzeugdaches bedingt, keine Durchsicht aus dem Fahrzeuginnenraum 28 nach außen und entsprechend auch keinen Lichteinfall nach innen gestattet.

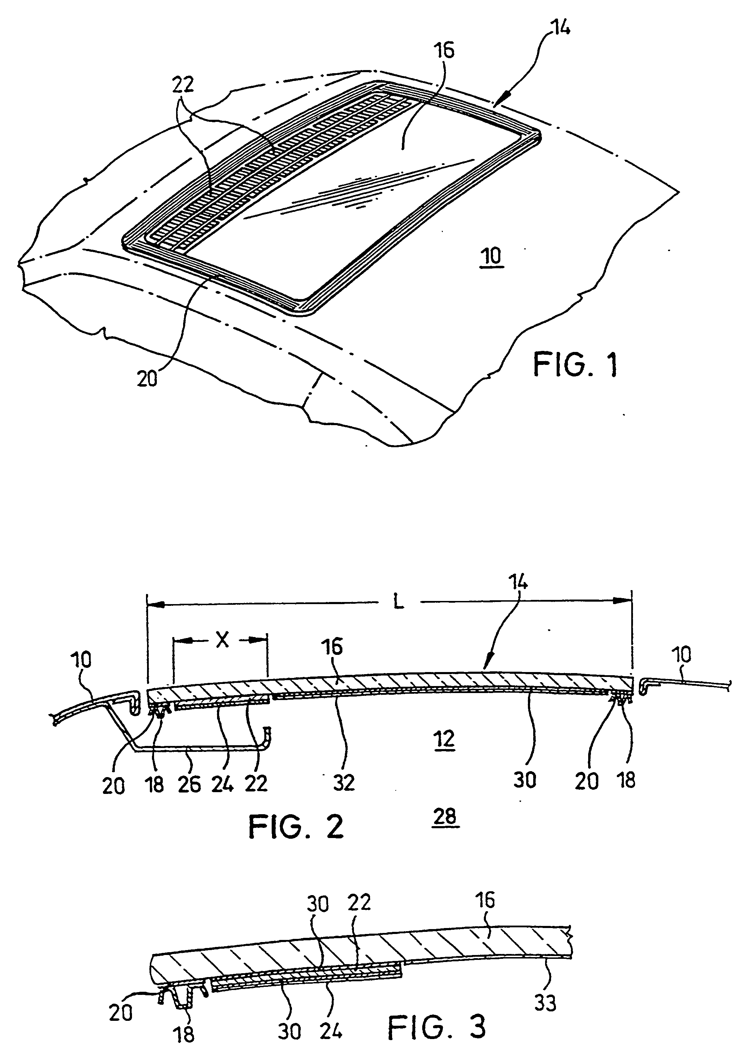

In dem Bereich des Deckels 14, der in Schließstellung in dem Bereich der Dachöffnung 12 liegt, die eine freie Durchsicht aus dem Fahrzeuginnenraum 28 nach außen gestattet, ist die Scheibe 16 an ihrer Unterseite mittels einer Klebefolie 30 mit einer Folie 32 laminiert, die für eine Verminderung der Transmission im sichtbaren Bereich und im Infrarot-Bereich sorgt, um einerseits für eine angenehme Helligkeit im Fahrzeuginnenraum 28 zu sorgen und andererseits zugleich eine übermäßige Aufheizung des Fahrzeuginnenraums 28 durch das einfallende Sonnenlicht zu verhindern. Bei der Folie 32 kann es sich um eine eingefärbte transparente Polycarbonat-Folie handeln. Ferner kann die Scheibe 16 vor dem Aufbringen der Polycarbonat-Folie mit einem Metalloxid beschichtet werden. Alternativ kann statt der Polycarbonat-Folie eine kratzfest beschichtete Abdunklungsfolie ("Dark-Tail-Folie") verwendet werden, die mittels aufgebrachtem Acrylatkleber direkt auf die Scheibe 16 aufgeklebt wird. Es kann auch ganz auf die Verwendung einer Folie verzichtet werden. In diesem Fall wird die Scheibe 16 stattdessen mit einer geeigneten transmissionsmindernden Beschichtung 33 (Fig. 3) versehen. Dabei kann es sich um ein auf die Unterseite aufgebrachtes Metalloxid, insbesondere Titanoxid bei Verwendung einer Sekurit-Scheibe handeln. Alternativ kann die Scheibe 16, insbesondere, wenn sie von der Fa. Pilkington hergestellt wird, mit Siglachrom (eingetragene Marke 1086779 der Pilkington Deutschland AG) oder Palladium beschichtet werden. Ferner kann die Scheibe 16 mit einer schwarzen Keramikbedruckung mit Punkt- oder Lochfritten versehen sein.

Statt den bewegbaren Deckel eines öffnungsfähigen Fahrzeugdaches zu bilden, kann das erfindungsgemäße Dachmodul auch für nicht öffnungsfähige transparente Fahrzeugdächer verwendet werden.

Der Bereich X des Deckels 14, der mit Solarzellen 22 versehen ist, macht in Bezug auf die gesamte Länge L des Deckels 14 in Fahrtrichtung einen Anteil von 10 bis 30 %, vorzugsweise etwa 20 % aus.

### Bezugszeichenliste

- feste Dachhaut: **10**
- Dachöffnung in 10: **12**
- Dachdeckel: **14**
- Deckelscheibe: **16**
- Verstärkungselement: **18**
- UV-Schutz: **20**
- Solarzellen: **22**
- undurchsichtige Folie: **24**
- Dachmechanik: **26**
- Fahrzeuginnenraum: **28**
- Klebefolie: **30**
- Polycarbonat-Folie: **32**
- Metalloxidbeschichtung: **33**

## Patentansprüche

1. Transparentes Dachmodul für ein Fahrzeugdach, mit einer transparenten, als Klarglasscheibe ausgebildeten Scheibe (16), bei welcher mindestens und ausschließlich ein Teil der Fläche der Scheibe (16), die konstruktionsbedingt nicht zur Durchsicht vom Fahrzeuginneren (28) nach außen nutzbar ist, mit Solarzellen (22) versehen ist und bei welcher der übrige, zur Durchsicht vom Fahrzeuginneren (28) nach außen nutzbare Teil der Fläche der Scheibe (16), der nicht mit Solarzellen (22) versehen ist, mit einer Schicht in Form einer Beschichtung (33) und/oder Folie (32) versehen ist, welche die Transmission durch die Scheibe im infraroten und im sichtbaren Spektralbereich verringert.

2. Dachmodul nach Anspruch 1, **dadurch gekennzeichnet, daß** die transparente Scheibe (16) Teil des Deckels (14) eines öffnungsfähigen Fahrzeugdaches ist.

3. Dachmodul nach Anspruch 1 oder 2, **dadurch gekennzeichnet, daß** die transmissionsmindernde Schicht als schwarze Keramikbedruckung mit Punkt- oder Lochfritten ausgebildet ist.

4. Dachmodul nach Anspruch 1 oder 2, **dadurch gekennzeichnet, daß** die transmissionsmindernde Schicht als eingefärbte Polycarbonat-Folie (32) ausgebildet ist, die von unten mit Klebefolie (30) auf die Scheibe (16) laminiert ist.

5. Dachmodul nach Anspruch 1 oder 2, **dadurch gekennzeichnet, daß** die transmissionsmindernde Schicht als Metalloxidbeschichtung (33) ausgebildet ist, die von unten auf die Scheibe (16) aufgebracht ist.

6. Dachmodul nach Anspruch 5, **dadurch gekennzeichnet, daß** auf die Metalloxidbeschichtung (33) ferner eine eingefärbte transparente Polycarbonat-Folie (32) mittels Klebefolie (30) laminiert ist.

7. Dachmodul nach Anspruch 1 oder 2, **dadurch gekennzeichnet, daß** die transmissionsmindernde Schicht als kratzfest beschichtete Abdunkelungsfolie ausgebildet ist, die mittels aufgebrachtem Acrylatkleber von unten auf die Scheibe (16) aufgeklebt ist.

8. Dachmodul nach Anspruch 1, **dadurch gekennzeichnet, daß** die transparente Scheibe aus Einscheibensicherheitsglas besteht und mit Titanoxid, Palladium oder anderen Hardcoatschichten beschichtet ist.

9. Dachmodul nach einem der vorhergehenden Ansprüche, **dadurch gekennzeichnet, daß** der mit Solarzellen bedeckete Bereich (X) des Deckels (14) in Bezug auf die gesamte Länge (L) des Deckels (14) einen Anteil von etwas 10 bis 30 %, vorzugsweise etwa 20 % einnimmt.

## Claims

1. Transparent roof module for a vehicle roof, having a transparent panel (16) formed as a clear glass panel, in which, at least and exclusively, a part of the area of the panel (16), which cannot be used for a view through to the outside from the vehicle interior (28) because of the construction, is provided with solar cells (22), and in which the remaining part of the area of the panel (16), which can be used for a view through to the outside from the vehicle interior (28) and which is not provided with solar cells (22), is provided with a layer in the form of a coating (33) and/or film (32), which reduces the transmission through the panel in the infrared and in the visible spectral range.

2. Roof module according to Claim 1, **characterized in that** the transparent panel (16) is part of the cover (14) of a vehicle roof that can be opened.

3. Roof module according to Claim 1 or 2, **characterized in that** the transmission-reducing layer is formed as a black ceramic print with dot or hole frits.

4. Roof module according to Claim 1 or 2, **characterized in that** the transmission-reducing layer is formed as a coloured polycarbonate film (32), which is laminated onto the panel (16) from below with adhesive film (30).

5. Roof module according to Claim 1 or 2, **characterized in that** the transmission-reducing layer is formed as a metal oxide coating (33) which is applied to the panel (16) from below.

6. Roof module according to Claim 5, **characterized in that** a coloured transparent polycarbonate film (32) is also laminated onto the metal oxide coating (33) by means of adhesive film (30).

7. Roof module according to Claim 1 or 2, **characterized in that** the transmission-reducing layer is formed as a shading film which is coated so as to be scratch-resistant and which is adhesively bonded to the panel (16) from below by means of an applied acrylic adhesive.

8. Roof module according to Claim 1, **characterized in that** the transparent panel consists of toughened safety glass and is coated with titanium oxide, palladium or other hard-coat layers.

9. Roof module according to one of the preceding claims, **characterized in that** the region (X) of the cover (14) covered with solar cells occupies a proportion of about 10 to 30%, preferably about 20%, in relation to the total length (L) of the cover (14).

## Revendications

1. Module de toit transparent pour toit de véhicule automobile, comprenant une vitre (16) conçue sous la forme d'une vitre de verre clair transparente, dans laquelle au moins et exclusivement une partie de la surface de la vitre (16) qui, de par sa structure même, ne peut être utilisée pour voir en transparence depuis l'habitacle du véhicule (28) vers l'extérieur, est pourvue de cellules solaires (22) et dans laquelle la partie restante de la surface de vitre (16) pouvant être utilisée pour voir en transparence depuis l'habitacle du véhicule (28) vers l'extérieur, qui ne comporte pas de cellules solaires (22), est pourvue d'une couche ayant la forme d'un revêtement (33) et/ou d'un film (32) qui réduit la transmission à travers la vitre dans le domaine de l'infrarouge et dans le domaine spectral visible.

2. Module de toit selon la revendication 1, **caractérisé en ce que** la vitre transparente (16) fait partie du panneau (14) d'un toit ouvrant de véhicule automobile.

3. Module de toit selon la revendication 1 ou 2, **caractérisé en ce que** la couche réduisant la transmission est conçue sous la forme d'une impression de céramique noire pourvue de frittes à points ou à trous.

4. Module de toit selon la revendication 1 ou 2, **caractérisé en ce que** la couche réduisant la transmission est conçue sous la forme d'un film de polycarbonate teinté (32), qui est contre-collé par en dessous à la vitre (16) à l'aide d'une feuille de collage (30).

5. Module de toit selon la revendication 1 ou 2, **caractérisé en ce que** la couche réduisant la transmission est conçue sous la forme d'un revêtement à base d'oxyde métallique (33) qui est appliqué par en dessous sur la vitre (16).

6. Module de toit selon la revendication 5, **caractérisé en ce qu'**un film de polycarbonate transparent et teinté (32) est en outre contre-collé sur le revêtement à base d'oxyde métallique (33) à l'aide d'une feuille de collage (30).

7. Module de toit selon la revendication 1 ou 2, **caractérisé en ce que** la couche réduisant la transmission est conçue sous la forme d'un film obscurcissant enduit de façon à résister aux éraflures qui est collé par en dessous sur la vitre (16) à l'aide d'une colle acrylate appliquée.

8. Module de toit selon la revendication 1, **caractérisé en ce que** la vitre transparente se compose d'un verre de sécurité trempé et qu'elle est revêtue d'oxyde de titane, de palladium ou d'autres couches de revêtement dur (hardcoat).

9. Module de toit selon l'une quelconque des revendications précédentes, **caractérisé en ce que** la zone (X) du panneau (14) couverte de cellules solaires représente environ 10 à 30 %, de préférence environ 20 % de la longueur totale (L) du panneau (14).
